# EUROPÄISCHE PATENTSCHRIFT

(11) **EP 3 500 759 B1**
(45) Veröffentlichungstag und Bekanntmachung des Hinweises auf die Patenterteilung: **23.08.2023**
(21) Anmeldenummer: 17772384.8
(22) Anmeldetag: 21.09.2017
(51) Int. Cl.: F16B 5/02

(54) **VORRICHTUNG ZUM AUSGLEICHEN VON TOLERANZEN**
DEVICE FOR COMPENSATING FOR TOLERANCES
DISPOSITIF DE COMPENSATION DE TOLÉRANCES

(30) Priorität: 30.09.2016 DE 102016118640
(43) Veröffentlichungstag der Anmeldung: 26.06.2019
(73) Patentinhaber: Witte Automotive GmbH, 42551 Velbert (DE)
(72) Erfinder: ERPENBECK, Till, 42555 Velbert (DE); BENTE, Jan Christian, 45540 Sprockhövel (DE)
(74) Vertreter: Manitz Finsterwald Patent- und Rechtsanwaltspartnerschaft mbB
(86) Internationale Anmeldenummer: PCT/EP2017/073940
(87) Internationale Veröffentlichungsnummer: WO 2018/060055

(56) Entgegenhaltungen:
- DE-A1-102009 044 635
- DE-A1-102012 102 906
- DE-A1-102013 216 716
- DE-U1-202006 012 493
- US-A1- 2015 330 435

## Beschreibung

Die vorliegende Erfindung betrifft eine Vorrichtung zum Ausgleichen von Toleranzen zwischen zwei zu verbindenden Bauteilen.

Derartige Vorrichtungen sind grundsätzlich bekannt und weisen beispielsweise ein Grundelement auf, welches an dem einen Bauteil anbringbar ist, und ein mit dem Grundelement in Gewindeeingriff stehendes Ausgleichselement, welches durch Herausdrehen aus dem Grundelement an dem anderen Bauteil zur Anlage bringbar ist. Zur Verbindung der beiden Bauteile dient ein Verbindungsmittel, wie beispielsweise eine Verbindungsschraube oder ein Gewindebolzen, welches durch einen sowohl in dem Grundelement als auch in dem Ausgleichselement vorgesehenen Durchgang durchsteckbar ist.

Das Herausdrehen des Ausgleichselements erfolgt durch Verdrehen des durchgesteckten Verbindungsmittels. Für die nötige Drehmomentübertragung ist ein Federelement in dem Durchgang des Ausgleichselements angeordnet, welches sich einerseits an dem Ausgleichselement abstützt und andererseits gegen das durch den Durchgang eingesteckte Verbindungsmittel drückt.

Eine Vorrichtung gemäß dem Oberbegriff des Anspruchs 1 ist in der DE 20 2006 012 493 U1 beschrieben. Weiterer Stand der Technik ist aus der DE 10 2012 102 906 A1, DE 10 2013 216 716 A1 und DE 10 2009 044 635 A1 bekannt.

Eine effektive Übertragung des Drehmoments ist mit bisherigen Federelementen nur bis zu einer bestimmten minimalen Größe des Federelements möglich, so dass letztendlich auch der Baugröße der Vorrichtung Grenzen gesetzt sind.

Eine Aufgabe der Erfindung ist es daher, eine Vorrichtung mit einem einfach und kostengünstig zu fertigenden Federelement zu schaffen, welches, insbesondere hin zu kleineren Größen, skalierbar ist.

Die Aufgabe wird durch eine Vorrichtung mit den Merkmalen des Anspruchs 1 gelöst.

Die erfindungsgemäße Vorrichtung umfasst ein Federelement mit mindestens einem Federarm, welcher in seiner Längsrichtung gesehen zwei gegenüberliegende Endbereiche aufweist, wobei mindestens einer der Endbereiche einen größeren Abstand zu einer Längsmittelachse des Federelements aufweist als ein zwischen den Endbereichen gelegener Zwischenabschnitt des Federarms und wobei zumindest einer der Endbereiche eine radial nach außen ragende Ecke ausbildet.

Der Erfindung liegt die Erkenntnis zugrunde, dass sich durch Verwendung eines Federelements mit mindestens einem Federarm, dessen mindestens einer Endbereich einen größeren Abstand zur Längsmittelachse des Federelements aufweist als ein zwischen den Endbereichen gelegener Zwischenabschnitt, eine effizientere Übertragung des Drehmoments von dem Verbindungsmittel auf das Ausgleichselement erreichen lässt. Dies bringt außerdem den zusätzlichen Vorteil mit sich, dass sich das Federelement leichter auf unterschiedliche Größen skalieren und insbesondere kompakter gestalten lässt. Überdies lässt sich das Verbindungsmittel aufgrund der unterschiedlichen Abstände des Endbereichs und des Zwischenbereichs zur Längsmittelachse leichter und insbesondere ohne die Gefahr einer Beschädigung des Federelements in das Federelement einführen.

Erfindungsgemäß sind mehrere Federarme um die Längsmittelachse des Federelements herum angeordnet und mittels eines Verbindungsrings miteinander verbunden. Ferner weist der Verbindungsring einen Schlitz auf, welcher zumindest annähernd parallel zu der Längsmittelachse des Federelements ausgerichtet ist. Der Schlitz ist dabei durch zwei benachbarte Federarme begrenzt.

Zur drehsicheren Lagerung des Federelements in dem Durchgang weist mindestens ein dem Schlitz zugewandter Endbereich eines Federarms eine radial nach außen ragende Ecke auf. Die Federkraft des geschlitzten Verbindungsrings bewirkt dann nämlich, dass die radial nach außen ragende Ecke in das Ausgleichselement gedrückt wird, wodurch das Federelement kraft- und/oder formschlüssig mit dem Ausgleichselement in Eingriff steht.

Vorteilhafte Ausbildungen der Erfindung sind den Unteransprüchen, der Beschreibung und den Zeichnungen zu entnehmen.

Vorteilhafterweise ragt die Ecke derart weit nach außen, dass sie sich in das Ausgleichselement hineindrückt, wenn das Federelement in dem Durchgang aufgenommen ist. Die Ecke kann sich somit in dem Ausgleichselement "verkrallen", wodurch das Federelement drehsicher in dem Durchgang gelagert ist.

Bevorzugt ist das Federelement in dem Durchgang des Ausgleichselements derart angeordnet, dass die Längsmittelachse des Federelements und eine Längsmittelachse des Ausgleichselements zumindest annähernd zusammenfallen. Damit das Verbindungsmittel leicht in den Durchgang eingeführt werden kann, weist der Federarm vorzugsweise eine Längserstreckung auf, wobei die Längserstreckung des Federarms und die Längsmittelachse annähernd gleichgerichtet sind. Dabei bedeutet eine zur Längsmittelachse des Federelements annähernd gleichgerichtete Längserstreckung eines Federarms in diesem Kontext nicht, dass der Federarm und die Längsmittelachse exakt parallel zueinander verlaufen müssen. Vielmehr kann der Federarm durchaus eine gewisse, die Federcharakteristik mitbestimmende Krümmung oder Auslenkung aufweisen, solange eine Hauptlängserstreckungskomponente des Federarms parallel zur Längsmittelachse verläuft.

Bevorzugt sind mindestens drei Federarme um die Längsmittelachse des Federelements herum angeordnet und mittels eines Verbindungsrings miteinander verbunden.

Vorteilhafterweise kann nicht nur mindestens ein Federarm sondern auch jeder Federarm in Längsrichtung gesehen zwei gegenüberliegende Endbereiche aufweisen, wobei mindestens ein Endbereich einen größeren Abstand zur Längsmittelachse aufweist als ein zwischen den Endbereichen gelegener Zwischenabschnitt eines Federarms.

Gemäß einer ersten Ausführungsform ist der Verbindungsring in axialer Richtung gesehen zwischen unverbundenen Endbereichen der Federarme ausgebildet. Jeder Federarm besitzt mit anderen Worten zwei gegenüberliegende unverbundene Endbereiche und der Verbindungsring definiert gewissermaßen eine Taille des Federelements.

Gemäß einer zweiten Ausführungsform weist jeder Federarm nur einen unverbundenen Endbereich auf, und der Verbindungsring verbindet diejenigen Endbereiche, welche den unverbundenen Endbereichen gegenüberliegen.

Gemäß einer dritten Ausführungsform sind sowohl die einen Endbereiche als auch die gegenüberliegenden Endbereiche jeweils durch einen Verbindungsring verbunden. Die Federarme entsprechen somit gewissermaßen beidseitig abgestützen Biegebalken, welche im Vergleich zu einseitig eingespannten Biegebalken ein geringeres Flächenträgheitsmoment aufweisen. Da das Flächenträgheitsmoment direkt proportional zu einer Breite des Balkens beziehungsweise eines Federarms und direkt proportional zur dritten Potenz einer Stärke des Balkens beziehungsweise eines Federarms ist, lässt sich mit einem Federelement gemäß der dritten Ausführungsform ein noch kompakterer Aufbau eines Federelements realisieren.

Da das Federelement gemäß der dritten Ausführungsform keine freien Endbereiche aufweist, wird auch ein gegenseitiges Verhaken einer Vielzahl von einzelnen, beispielsweise in einem Sammelbehälter aufbewahrten Federelementen effektiv unterbunden. Mit anderen Worten wird sogenanntes "Nesting" vermieden.

Bevorzugt lassen sich die beiden den Schlitz begrenzenden Federarme in Umfangsrichtung des Federelements gesehen entgegen einer Federkraft des geschlitzten Verbindungsrings aufeinander zubewegen, so dass der Verbindungsring einen Federring bildet. Indem sich die beiden den Schlitz begrenzenden Federarme aufeinander zubewegen lassen, wird ein Einführen des Federelements in den Durchgang des Ausgleichselements erleichtert.

Des Weiteren wirkt sich positiv auf die Federeigenschaften des Federelements aus, wenn das Federelement aus einem Metall, insbesondere aus einem Federstahl und vorzugsweise aus einem nicht-rostenden Federstahl, gefertigt ist.

Ist das Federelement aus einem Federstahl gefertigt, so kann bei der Herstellung des Federelements auf eine anschließende Wärmebehandlung verzichtet werden, wodurch ein Wärmeverzug des Federelements entfällt. Dieser Aspekt ist insbesondere für kompakte Federelemente mit geringen Abmessungen wichtig, da sich ein Wärmeverzug bei derartigen Strukturen besonders deutlich bemerkbar macht.

Überdies wirkt sich eine höhere Härte des Federstahls beim Eindrücken einer nach außen ragenden Ecke in das Ausgleichselement positiv aus, insbesondere wenn das Ausgleichselement aus einem weicheren Material, wie zum Beispiel aus einem Kunststoff oder aus Aluminium, gefertigt ist.

Prinzipiell kann das Federelement aber auch aus einem anderen Material, wie zum Beispiel aus einem Kunststoffmaterial, gefertigt sein.

Vorteilhafterweise verläuft der oder jeder Verbindungsring jeweils in einer Ebene, welche zumindest annähernd senkrecht zu der Längsmittelachse des Federelements ausgerichtet ist, d.h. der Verbindungsring weist Verbindungsabschnitte auf, welche sich zwischen den Federarmen erstrecken und welche sich auf einer gemeinsamen Höhe befinden. Grundsätzlich können sich die zwischen den Federarmen erstreckenden Verbindungsabschnitte aber auch auf unterschiedlichen Höhen befinden, mit anderen Worten also in unterschiedlichen Ebenen liegen, wobei die unterschiedlichen Ebenen zumindest annähernd senkrecht oder auch schräg zu der Längsmittelachse ausgerichtet sein können.

Die Erfindung betrifft auch eine Vorrichtung zum Ausgleichen von Toleranzen zwischen zu verbindenden Bauteilen mit einem Grundelement, einem mit dem Grundelement in Eingriff stehenden Ausgleichselement, in welchem ein Durchgang für ein Verbindungsmittel ausgebildet ist, und einem Federelement der voranstehend beschriebenen Art, welches in dem Durchgang des Ausgleichselements angeordnet ist.

Nachfolgend wird die Erfindung rein beispielhaft anhand möglicher Ausführungsformen unter Bezugnahme auf die beigefügten Zeichnungen beschrieben. Es zeigen:
- Fig. 1: eine perspektivische Ansicht eines Federelements gemäß einer ersten Ausführungsform;
- Fig. 2: eine perspektivische Ansicht eines Ferderelements gemäß einer zweiten Ausführungsform;
- Fig. 3: eine perspektivische Ansicht eines Ferderelements gemäß einer dritten Ausführungsform;
- Fig. 4: eine Seitenansicht des Federelements von Fig. 3;
- Fig. 5: eine perspektivische Teilschnittansicht des in einem Ausgleichselement aufgenommenen Federelements von Fig. 3;
- Fig. 6: eine Draufsicht des in dem Ausgleichselement aufgenommenen Federelements von Fig. 3;
- Fig. 7: eine Teilschnittansicht eines in einem Ausgleichselement aufgenommenen Federelements mit einem Verbindungsmittel in einer Vormontageposition; und
- Fig. 8: eine detaillierte Teilschnittansicht des in dem Ausgleichselement aufgenommenen Federelements mit dem Verbindungsmittel in einer montierten Position.

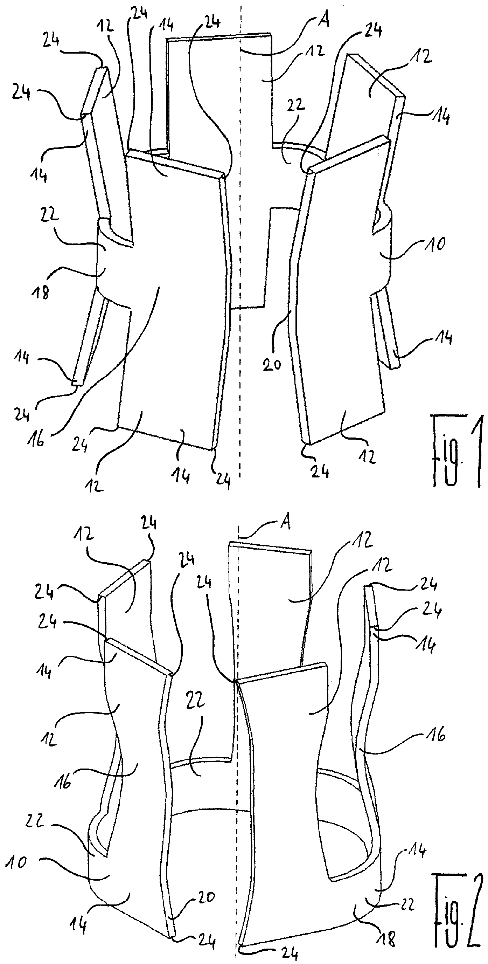

Fig. 1 zeigt ein Federelement 10 gemäß einer ersten Ausführungsform. Das dargestellte Federelement 10 weist fünf Federarme 12 auf, welche um eine Längsmittelachse A des Federelements 10 herum angeordnet sind, wobei eine Längserstreckung eines jeweiligen Federarms 12 und die Längsmittelachse A zumindest annähernd gleich gerichtet ist.

Jeder Federarm 12 weist in Längsrichtung gesehen zwei gegenüberliegende Endbereiche 14 auf, zwischen welchen sich ein Zwischenabschnitt 16 des Federarms 12 befindet. Dabei sind die beiden Endbereiche 14 des Federarms 16 von der Längsmittelachse A radial weiter entfernt als die Zwischenabschnitte 16. Anders ausgedrückt sind die Endbereiche 14 in axialer Richtung radial nach außen ausgestellt, während die Zwischenabschnitte 16 in Richtung der Längsmittelachse A radial nach innen gewölbt sind.

Die Federarme 12 sind durch einen Verbindungsring 18 miteinander verbunden, welcher durch einen Schlitz 20 unterbrochen ist. Der Schlitz 20 ist zumindest annähernd parallel zur Längsmittelachse A ausgerichtet und wird durch zwei benachbarte Federarme 12 begrenzt. Überdies umfasst der Verbindungsring 18 Verbindungsabschnitte 22, welche sich jeweils zwischen zwei benachbarten Federarmen 12 befinden. In dem in Fig. 1 dargestellten Ausführungsbeispiel gehen die Verbindungsabschnitte 22 in die Zwischenabschnitten 16 der Federarme 12 über, während die Endbereiche 14 der Federarme 12 unverbunden sind.

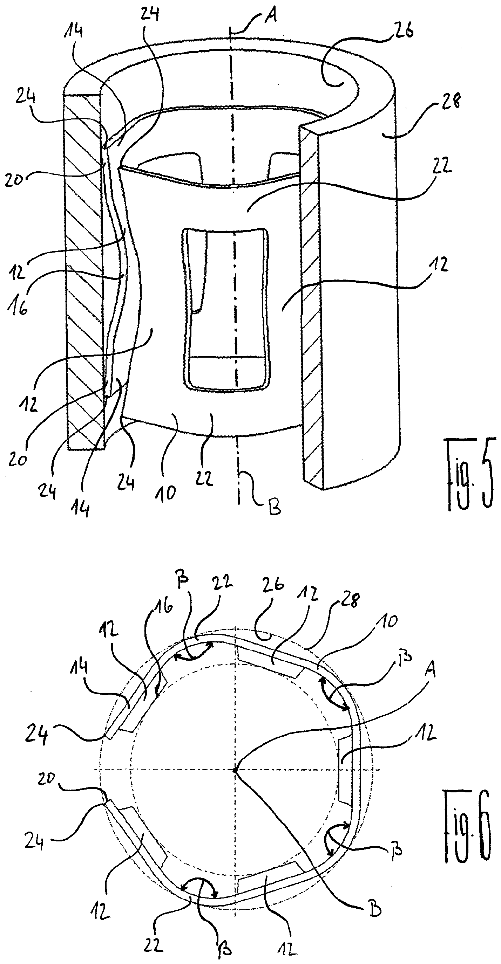

Die dem Schlitz 20 zugewandten Endbereiche 14 der den Schlitz 20 begrenzenden Federarme 12 weisen jeweils eine dem Schlitz 20 zugewandte und radial nach außen ragende Ecke 24 auf, deren Funktionsweise im Zusammenhang mit Fig. 5 und 6 genauer erläutert wird. Es versteht sich, dass auch die anderen Federarme 12, welche nicht den Schlitz 20 begrenzen, Endbereiche 14 mit radial nach außen ragenden Ecken 24 aufweisen können.

Wie anhand von Fig. 1 zu erkennen ist, verläuft der Verbindungsring 18 mittig zwischen den jeweiligen Endbereichen 14 eines Federarms in einer Ebene, welche zumindest annähernd senkrecht zur Längsmittelachse A ausgerichtet ist, d.h. sämtliche Verbindungsabschnitte 22 liegen auf einer Höhe. Grundsätzlich kann der Verbindungsring 18 aber auch in einer Ebene liegen, welche quer zur Längsmittelachse A ausgerichtet ist. Überdies muss der Verbindungsring 18 nicht unbedingt mittig zwischen den Endbereichen 14 ausgebildet sein, sondern er kann auch in axialer Richtung versetzt sein.

Fig. 2 zeigt eine zweite Ausführungsform eines Federelements 10, welche sich von der ersten Ausführungsform darin unterscheidet, dass der Verbindungsring 18 nicht auf der Höhe des Zwischenabschnitts 16 ausgebildet ist, sondern an einem axialen Ende des Federelements 10. Jeder Federarm 12 weist so einen unverbundenen freien Endbereich 14 und einen gegenüberliegenden verbundenen Endbereich 14 auf, welcher durch den Verbindungsring 18 mit einem Endbereich 14 eines benachbarten Federarms 12 verbunden ist.

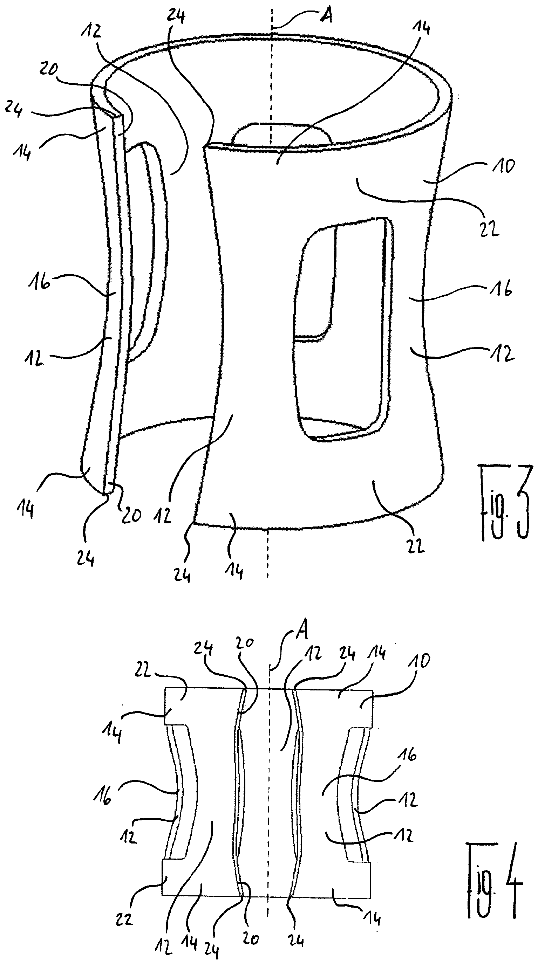

Fig. 3 zeigt eine dritte Ausführungsform eines Federelements 10, welche sich von den voranstehenden Ausführungsformen darin unterscheidet, dass zwei Verbindungsringe 18 vorgesehen sind, wobei der eine Verbindungsring 18 die einen Endbereiche 14 und der andere Verbindungsring 18 die anderen, gegenüberliegenden Endbereiche 14 der Federarme 12 verbindet.

Im Folgenden wird bezugnehmend auf Fig. 5 und 6 rein beispielhaft anhand eines Federelements 10 gemäß der dritten Ausführungsform die Funktionsweise der radial nach außen ragenden Ecken 24 beschrieben, welche an den den Schlitz 20 begrenzenden Federarmen 12 ausgebildet sind. Es versteht sich, dass die nachfolgend beschriebene Lehre auch auf die Federelemente 10 gemäß der ersten und zweiten Ausführungsform übertragen werden kann.

Das Federelement 10 weist in einem Vormontagezustand, d.h. wenn das Federelement 10 noch nicht in dem Durchgang 26 eines Ausgleichselements 28 angeordnet ist, gegenüber dem Durchgang 26 des Ausgleichselements 28 ein radiales Übermaß auf. Wird das Federelement 10 in den Durchgang 26 eingeführt, so werden die Verbindungsringe 18 entgegen einer Federkraft der Verbindungsringe 18 zusammengedrückt, wobei die den Schlitz 20 begrenzenden Federarme 12 aufeinander zubewegt werden. Ein in dem Durchgang 26 des Ausgleichselements 28 ausgebildeter Absatz oder Vorsprung 31 verhindert, dass das Federelement 10 durch den Durchgang 26 hindurch und aus dem Ausgleichselement 28 heraus gedrückt werden kann.

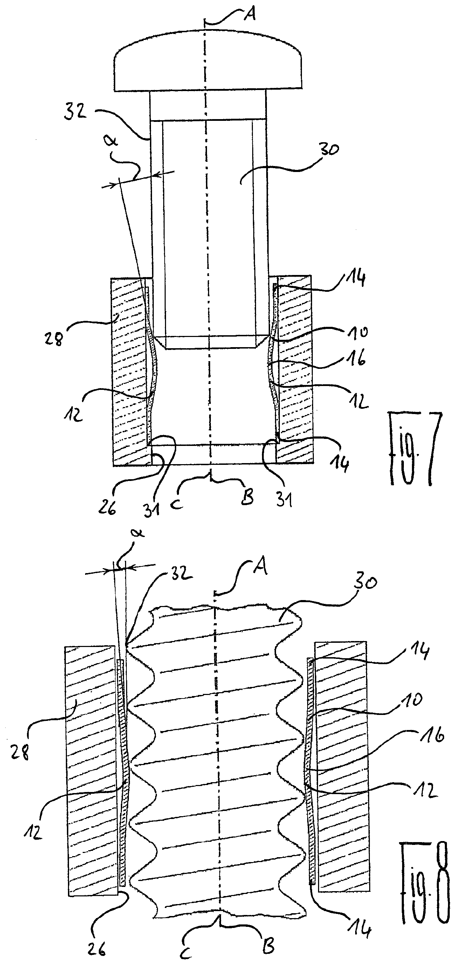

Sitzt das Federelement 10 in dem Durchgang 26 so bewirkt die Federkraft der Verbindungsringe 18, dass die radial nach außen ragenden Ecken 24 in das Ausgleichselement 28 hineingedrückt werden. Dieser Effekt wird zusätzlich noch verstärkt, wenn ein Verbindungsmittel 30 (Fig. 7) durch den Durchgang 26 durchgesteckt wird, wodurch die den Schlitz 20 begrenzenden Federarme 12 und somit auch die daran ausgebildeten Ecken 24 nach radial außen gedrückt werden. Infolgedessen werden die Ecken 24 noch weiter in das Ausgleichselement 28 hineingedrückt. Wird nun durch das Verbindungsmittel 30 eine Drehbewegung auf das Federelement 10 übertragen, so führt dies dazu, dass sich die radial nach außen ragenden Ecken 24 zusätzlich noch in dem Durchgang 26 des Ausgleichselements 28 verkanten, wodurch letztendlich eine Drehsicherung des Federelements 10 gegenüber dem Ausgleichselement 28 erreicht wird, so dass eine Drehbewegung des Verbindungsmittels 30 zuverlässig auf das Ausgleichselement 28 übertragen werden kann.

Überdies wird durch die in das Ausgleichselement 28 hineingedrückten Ecken 24 der Federarme 12 verhindert, dass das Federelement 10 bei einem Herausziehen des Verbindungsmittels 30 aus dem Ausgleichselement 28 in axialer Richtung verrutschen kann. Das Federelement 10 verweilt gewissermaßen also in dem Ausgleichselement 28, wodurch auf eine zusätzliche axiale Fixierung des Federelements 10 in dem Durchgang 26 des Ausgleichselements 28 entgegen der Fügerichtung des Verbindungsmittels 30 verzichtet werden kann.

Beim Einführen des Verbindungsmittels 30 in das in dem Durchgang 26 angeordnete Federelements 10 ist von Vorteil, dass die Endbereiche 14 der Federarme 12 einen größeren Abstand zur Längsmittelachs A des Federelements 10 aufweisen als die Zwischenabschnitte 16 zwischen den Endbereichen 14. Hierdurch wird das Verbindungsmittel 30 beim Einführen in das Federelement 10 durch die Zwischenabschnitte 16 der Federarme 12 geführt, wobei die Vielzahl von Federarmen 12 bewirkt, dass das Verbindungsmittel 30 in dem Durchgang 26 des Ausgleichselements 28 zentriert wird, so dass idealerweise die Längsmittelachse A, eine Längsmittelachse B des Ausgleichselements 28 und eine Längsmittelachse C des Verbindungsmittels 30 zusammenfallen. Hierdurch wird verhindert, dass sich das Federelement 10 in dem Durchgang 26 des Ausgleichselements 28 verkantet und beim Durchstecken des Verbindungsmittels 30 beschädigt wird.

Überdies nimmt die beim Einführen des Verbindungsmittels 30 in das in dem Durchgang 26 angeordnete Federelement 10 aufzuwendende Kraft mit fortschreitender Eindringtiefe degressiv ab, wie nun mit Bezug auf die Fig. 7 und 8 erläutert wird. Ist das Verbindungsmittel 30, welches hier in Form einer Schraube ausgebildet ist, noch nicht sehr weit in das Federelement 10 eingeführt, so weist ein Winkel α zwischen einem Schaft 32 des Verbindungsmittels 30 und den in Richtung der Längsmittelachse A des Federelements 10 gewölbten Zwischenabschnitten 16 einen maximalen Wert auf. Mit zunehmender Eindringtiefe des Verbindungsmittels 30 werden die Federarme 12 durch den Schaft 32 des Verbindungsmittels 30 radial nach außen gedrückt, wodurch der Winkel α kleiner wird. Da die beim Einführen des Verbindungsmittels 30 in axialer Richtung aufzubringende Kraft direkt proportional zu dem Winkel α ist und sich der Winkel α mit zunehmender Eindringtiefe des Verbindungsmittels 30 verringert, nimmt auch die in axialer Richtung aufzubringende Kraft ab, wodurch sich das Verbindungsmittel 30 zunehmend leichter durch das Ausgleichselement 28 durchstecken lässt.

Bei den voranstehend beschriebenen Federelementen 10 handelt es sich um Stanzbiegeteile, welche vorzugsweise aus einem Federstahl gefertigt sind. Dabei ist von Vorteil, wie anhand von Fig. 6 zu erkennen ist, dass bei einem Federelement 10 mit fünf Federarmen 12 ein Innenwinkel β zwischen zwei benachbarten Federarmen 12 größer als 90° gehalten werden kann, wobei der Innenwinkel β umso größer ist, je mehr Federarme 12 ein Federelement 10 aufweist. Der Federstahl muss somit bei der Herstellung eines Federelements 10 weniger stark gebogen werden, wodurch sich die Herstellung eines Federelements 10 erleichtert. Es versteht sich, dass ein Federelement 10 aber auch durch ein anderes Verfahren, wie zum Beispiel durch Spritzgießen von Kunststoffmaterialien, hergestellt werden kann.

Abschließend sei erwähnt, dass obwohl die in den Ausführungsbeispielen dargestellten Federelemente 10 jeweils fünf Federarme 12 aufweisen, die Anzahl der Federarme 12 auch von fünf abweichen kann, so dass ein Federelement 10 mehr oder weniger als fünf, vorzugsweise jedoch mindestens drei, Federarme 12 aufweisen kann. Überdies müssen die Abstände zwischen den Federarmen 12 in Umfangsrichtung gesehen nicht äquidistant sein. Vielmehr können die Federarme 12 auch unterschiedliche Abstände zueinander aufweisen.

### Bezugszeichenliste

- 10: Federelement
- 12: Federarm
- 14: Endbereich
- 16: Zwischenabschnitt
- 18: Verbindungsring
- 20: Schlitz
- 22: Verbindungsabschnitt
- 24: Ecke
- 26: Durchgang
- 28: Ausgleichselement
- 30: Verbindungsmittel
- 31: Vorsprung
- 32: Schaft

- α: Winkel
- β: Innenwinkel

- A: Längsmittelachse
- B: Längsmittelachse
- C: Längsmittelachse

## Patentansprüche

1. Vorrichtung zum Ausgleichen von Toleranzen zwischen einem ersten und zweiten Bauteil mit einem Grundelement, einem mit dem Grundelement in Gewindeeingriff stehenden Ausgleichselement (28), in welchem ein Durchgang (26) für ein Verbindungsmittel ausgebildet ist, und einem in dem Durchgang (26) des Ausgleichselements (28) angeordneten Federelement (10), wobei das Federelement (10) mindestens einen Federarm (12) umfasst, welcher in seiner Längsrichtung gesehen zwei gegenüberliegende Endbereiche (14) aufweist, wobei mindestens einer der Endbereiche (14) einen größeren Abstand zu einer Längsmittelachse (A) des Federelements (10) aufweist als ein zwischen den Endbereichen (14) gelegener Zwischenabschnitt (16) des Federarms (12), wobei zumindest einer der Endbereiche (14) eine radial nach außen ragende Ecke (24) ausbildet und wobei mehrere Federarme (12) um die Längsmittelachse (A) des Federelements (10) herum angeordnet und mittels eines Verbindungsrings (18) miteinander verbunden sind,
**dadurch gekennzeichnet, dass**
der Verbindungsring (18) einen Schlitz (20) aufweist, welcher zumindest annähernd parallel zu der Längsmittelachse (A) des Federelements (10) ausgerichtet und durch zwei benachbarte Federarme (12) begrenzt ist, und mindestens ein dem Schlitz (20) zugewandter Endbereich (14) eines Federarms (12) eine Ecke (24) aufweist, welche radial nach außen ragt.

2. Vorrichtung nach Anspruch 1,
**dadurch gekennzeichnet, dass**
jeder Federarm (12) eine Längserstreckung aufweist, wobei die Längserstreckung eines Federarms (12) und die Längsmittelachse (A) annähernd gleichgerichtet sind.

3. Vorrichtung nach Anspruch 1 oder 2,
**dadurch gekennzeichnet, dass**
jeder Federarm (12) in Längsrichtung gesehen zwei gegenüberliegende Endbereiche (14) aufweist, wobei mindestens ein Endbereich (14) einen größeren Abstand zur Längsmittelachse (A) aufweist als ein zwischen den Endbereichen (14) gelegener Zwischenabschnitt (16) eines Federarms (12).

4. Vorrichtung nach zumindest einem der Ansprüche 1 bis 3,
**dadurch gekennzeichnet, dass**
mindestens drei Federarme (12) um die Längsmittelachse (A) des Federelements (10) herum angeordnet sind und mittels eines Verbindungsrings (18) miteinander verbunden sind.

5. Vorrichtung nach zumindest einem der vorstehenden Ansprüche,
**dadurch gekennzeichnet, dass**
der Verbindungsring (18) in axialer Richtung gesehen zwischen unverbundenen Endbereichen (14) der Federarme (12) ausgebildet ist.

6. Vorrichtung nach zumindest einem der vorstehenden Ansprüche,
**dadurch gekennzeichnet, dass**
jeder Federarm (12) einen unverbundenen Endbereich (14) und einen gegenüberliegenden verbundenen Endbereich (14) aufweist, wobei verbundene Endbereiche (14) durch den Verbindungsring (18) verbunden sind.

7. Vorrichtung nach zumindest einem der vorstehenden Ansprüche,
**dadurch gekennzeichnet, dass**
sowohl die einen Endbereiche (14) als auch die gegenüberliegenden Endbereiche (14) jeweils durch einen Verbindungsring (18) verbunden sind.

8. Vorrichtung nach zumindest einem der vorstehenden Ansprüche,
**dadurch gekennzeichnet, dass**
das Federelement (10) aus einem Metall, insbesondere aus einem Federstahl, gefertigt ist.

9. Vorrichtung nach zumindest einem der vorstehenden Ansprüche,
**dadurch gekennzeichnet, dass**
der Verbindungsring (18) in einer Ebene verläuft, welche zumindest annähernd senkrecht zu der Längsmittelachse (A) ausgerichtet ist.

## Claims

1. A device for compensating for tolerances between a first and second component, having a base element, having a compensating element (28) which engages with the base element by means of a threading and in which a passage (26) is formed for a connecting means, and having a spring element (10) arranged in the passage (26) of the compensating element (28), wherein the spring element (10) comprises at least one spring arm (12) which, as seen in its longitudinal direction, has two opposite end regions (14), wherein at least one of the end regions (14) has a greater distance from a longitudinal central axis (A) of the spring element (10) than an intermediate section (16) of the spring arm (12) situated between the end regions (14), wherein at least one of the end regions (14) forms a corner (24) which protrudes radially outwards, and wherein a plurality of spring arms (12) are arranged around the longitudinal central axis (A) of the spring element (10) and are connected to one another by means of a connecting ring (18),
**characterized in that**
the connecting ring (18) has a slot (20), which is aligned at least approximately parallel to the longitudinal central axis (A) of the spring element (10) and is bounded by two adjacent spring arms (12), and at least one end region (14) of a spring arm (12) facing the slot (20) has a corner (24) which protrudes radially outwards.

2. A device in accordance with claim 1,
**characterized in that**
each spring arm (12) has a longitudinal extension, with the longitudinal extension of a spring arm (12) and the longitudinal central axis (A) being approximately in alignment.

3. A device in accordance with claim 1 or 2,
**characterized in that**
each spring arm (12) as seen in the longitudinal direction has two opposite end regions (14), with at least one end region (14) having a greater distance from the longitudinal central axis (A) than an intermediate section (16) of a spring arm (12) situated between the end regions (14).

4. A device in accordance with at least one of the claims 1 to 3,
**characterized in that**
at least three spring arms (12) are arranged around the longitudinal central axis (A) of the spring element (10) and are connected to one another by means of a connecting ring (18).

5. A device in accordance with at least one of the preceding claims,
**characterized in that**
the connecting ring (18) as seen in the axial direction is formed between unconnected end regions (14) of the spring arms (12).

6. A device in accordance with at least one of the preceding claims,
**characterized in that**
each spring arm (12) has an unconnected end region (14) and an opposite, connected end region (14), with connected end regions (14) being connected by the connecting ring (18).

7. A device in accordance with at least one of the preceding claims,
**characterized in that**
both the end regions (14) and the opposite end regions (14), respectively, are each connected by a connecting ring (18).

8. A device in accordance with at least one of the preceding claims,
**characterized in that**
the spring element (10) is made of a metal, in particular of a spring steel.

9. A device in accordance with at least one of the preceding claims,
**characterized in that**
the connecting ring (18) extends in a plane which is aligned at least approximately perpendicular to the longitudinal central axis (A).

## Revendications

1. Dispositif de compensation de tolérances entre un premier et un deuxième composant, comprenant un élément de base, un élément de compensation (28) en prise par filetage avec l'élément de base, dans lequel est formé un passage (26) pour un moyen de liaison, et un élément élastique (10) disposé dans le passage (26) de l'élément de compensation (28),
dans lequel
l'élément élastique (10) comprend au moins un bras élastique (12) qui, vu dans sa direction longitudinale, présente deux zones d'extrémité (14) opposées, au moins l'une des zones d'extrémité (14) présentant une distance par rapport à un axe longitudinal médian (A) de l'élément élastique (10) supérieure à celle d'une portion intermédiaire (16) du bras élastique (12) située entre les zones d'extrémité (14), et l'une au moins des zones d'extrémité (14) formant un coin (24) faisant saillie radialement vers l'extérieur, plusieurs bras élastiques (12) étant disposés autour de l'axe longitudinal médian (A) de l'élément élastique (10) et étant reliés entre eux au moyen d'une bague de liaison (18),
**caractérisé en ce que**
la bague de liaison (18) présente une fente (20) qui est orientée au moins approximativement parallèlement à l'axe longitudinal médian (A) de l'élément élastique (10) et qui est délimitée par deux bras élastiques (12) adjacents, et
au moins une zone d'extrémité (14) d'un bras élastique (12) tournée vers la fente (20) présente un coin (24) faisant saillie radialement vers l'extérieur.

2. Dispositif selon la revendication 1,
**caractérisé en ce que**
chaque bras élastique (12) présente une extension longitudinale, l'extension longitudinale d'un bras élastique (12) et l'axe longitudinal médian (A) étant orientés approximativement dans le même sens.

3. Dispositif selon la revendication 1 ou 2,
**caractérisé en ce que**
chaque bras élastique (12), vu dans le sens de la longueur, présente deux zones d'extrémité (14) opposées, au moins une zone d'extrémité (14) présentant une distance par rapport à l'axe longitudinal médian (A) supérieure à celle d'une portion intermédiaire d'un bras élastique (12) située entre les zones d'extrémité (14).

4. Dispositif selon l'une au moins des revendications 1 à 3,
**caractérisé en ce que**
au moins trois bras élastiques (12) sont disposés autour de l'axe longitudinal médian (A) de l'élément élastique (10) et sont reliés entre eux au moyen d'une bague de liaison (18).

5. Dispositif selon l'une des revendications précédentes,
**caractérisé en ce que**
la bague de liaison (18), vue dans la direction axiale, est formée entre les zones d'extrémité (14) non reliées des bras élastiques (12).

6. Dispositif selon l'une au moins des revendications précédentes,
**caractérisé en ce que**
chaque bras élastique (12) présente une zone d'extrémité (14) non reliée et une zone d'extrémité (14) reliée opposée, les zones d'extrémité reliées (14) étant reliées par la bague de liaison (18).

7. Dispositif selon l'une au moins des revendications précédentes,
**caractérisé en ce que**
aussi bien lesdites zones d'extrémité (14) que les zones d'extrémité opposées (14) sont reliées chacune par une bague de liaison (18).

8. Dispositif selon l'une au moins des revendications précédentes,
**caractérisé en ce que**
l'élément élastique (10) est fabriqué en métal, en particulier en acier à ressort.

9. Dispositif selon l'une au moins des revendications précédentes,
**caractérisé en ce que**
la bague de liaison (18) s'étend dans un plan qui est au moins approximativement perpendiculaire à l'axe longitudinal médian (A).
